(19) Europäisches Patentamt

European Patent Office

Office européen des brevets

(11) **EP 4 571 595 A1**

## EUROPEAN PATENT APPLICATION
published in accordance with Art. 153(4) EPC

(43) Date of publication:
**18.06.2025   Bulletin 2025/25**

(21) Application number: **23862331.8**

(22) Date of filing: **04.09.2023**

(51) International Patent Classification (IPC):
***G06N 10/20*** *(2022.01)*       ***G06N 10/40*** *(2022.01)*

(52) Cooperative Patent Classification (CPC):
**G06N 10/20; G06N 10/40**

(86) International application number:
**PCT/CN2023/116689**

(87) International publication number:
**WO 2024/051637 (14.03.2024 Gazette 2024/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.09.2022   CN 202211098236**

(71) Applicant: **Huawei Technologies Co., Ltd.
Shenzhen, Guangdong 518129 (CN)**

(72) Inventors:
• **CUI, Jiangyu
Shenzhen, Guangdong 518129 (CN)**

• **WANG, Biying
Shenzhen, Guangdong 518129 (CN)**
• **LIU, Wuxin
Shenzhen, Guangdong 518129 (CN)**
• **ZOU, Yang
Shenzhen, Guangdong 518129 (CN)**
• **CAO, Xi
Shenzhen, Guangdong 518129 (CN)**
• **YUNG, Manhong
Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **METHOD AND SYSTEM FOR DETERMINING OPERATING FREQUENCIES OF PLURALITY OF QUANTUM BITS**

(57)    This disclosure relates to a method and system for determining operating frequencies of multiple qubits. The method includes: setting, based on a quantum layered structure of a quantum circuit, a corresponding virtual idle layer including a single-bit gate before at least a part of quantum interaction layers in a quantum layer, where each quantum interaction layer includes at least one multi-bit gate; and determining, based on a group of idle frequencies that are used for the multiple qubits and that are for the virtual idle layer, a group of operating frequencies that are used for the multiple qubits and that are for the quantum interaction layer.

FIG. 1

Processed by Luminess, 75001 PARIS (FR)

EP 4 571 595 A1

## Description

This application claims priority to Chinese Patent Application No. 202211098236.4, filed on September 8, 2022 and entitled "METHOD AND SYSTEM FOR DETERMINING OPERATING FREQUENCIES OF MULTIPLE QUBITS", which is incorporated herein by reference.

## TECHNICAL FIELD

Embodiments of this disclosure relate generally to the field of quantum chips, and more specifically, to a method and system for determining operating frequencies of multiple qubits.

## BACKGROUND

Quantum computing and related research of the quantum computing are one of the most cutting-edge research hotspots in the world and also one of the most competitive candidates in the post-Moore era. At present, systems used to construct quantum computing mainly include an optical system, an ion trap system, a cold atomic system, a nuclear magnetic system, and a superconducting system. By way of an example only, a superconducting quantum computing system has coherence time of up to approximately 100 $\mu$s and is easy to integrate. This makes the system become one of the most promising scalable quantum computing platforms. In a superconducting quantum processor structure in which a Josephson (Josephson) junction constructed using a superconducting material is used as a qubit, a frequency of the qubit may be adjusted by applying a magnetic flux.

## SUMMARY

An objective of this disclosure is to provide a novel method and system for determining operating frequencies of multiple qubits in a quantum circuit.

According to a first aspect of this disclosure, a method for determining operating frequencies of multiple qubits is provided. The method includes: setting, based on a quantum layered structure of a quantum circuit, a corresponding virtual idle layer including a single-bit gate before at least a part of quantum interaction layers in a quantum layer, where each quantum interaction layer includes at least one multi-bit gate; and determining, based on a group of idle frequencies that are used for the multiple qubits and that are for the virtual idle layer, a group of operating frequencies that are used for the multiple qubits and that are for the quantum interaction layer.

It may be understood that, in the method for determining operating frequencies of multiple qubits in this disclosure, allocation dependency of a quantum interaction layer as a next layer on an operating frequency (that is, a quantum interaction frequency) of a quantum interaction layer as a previous layer may be removed, and this may at least simplify determining (calculation or allocation) of operating frequencies that are for the at least a part of quantum interaction layers and that are used for the qubits.

In some embodiments, the setting a corresponding virtual idle layer including a single-bit gate before at least a part of quantum interaction layers in a quantum layer includes: at least setting one layer of the corresponding virtual idle layer including the single-bit gate before each quantum interaction layer in the quantum layer. In this way, frequency allocation or determining of each quantum interaction layer may be simplified without considering frequency allocation of a previous actual quantum layer of each quantum interaction layer.

In some embodiments, the group of operating frequencies are used as target frequencies, and determining the target frequencies includes: constructing a topology related to the multiple qubits in a quantum chip at which the quantum circuit is targeted; constructing, based on the topology and the target frequencies that are to be determined, a local frequency error model related to a plurality of error influencing factors of the target frequencies; and obtaining a group of initial target frequencies based on the local frequency error model. In these embodiments, this step may be performed in an open-loop part, and the target frequencies may be optimized by constructing a proper local frequency error model.

In some embodiments, the obtaining a group of initial target frequencies includes: performing theoretical fidelity simulation on a quantum layer corresponding to the group of initial target frequencies; optimizing, based on a result of the theoretical fidelity simulation, a weighting factor that is in the local frequency error model and that is related to the plurality of error influencing factors; and obtaining a group of updated initial target frequencies based on an optimized weighting factor. In these embodiments, accuracy of the initial target frequencies provided in the open-loop part may be improved by optimizing the weighting factor, and fine-tuning time in a subsequent possible closed-loop optimization part may be saved.

In some embodiments, determining the target frequencies further includes: determining the group of updated initial target frequencies as the target frequencies that are to be determined.

In some embodiments, determining the target frequencies further includes: performing, on an actual platform including the multiple qubits, actual fidelity measurement on a quantum layer corresponding to the group of updated initial target frequencies; and determining the group of updated initial target frequencies as the target frequencies when it is determined that an actual fidelity is within a threshold. In these embodiments, this step is performed in a closed-loop part to verify, in the closed-loop part, accuracy of the initial target frequencies obtained in the open-loop part.

In some embodiments, the actual fidelity measurement includes cross entropy benchmarking (XEB) or randomized benchmarking (RB).

In some embodiments, determining the target frequencies further includes: when the actual fidelity is not within the threshold, generating an abnormal topology of the target frequencies; generating a to-be-calibrated target frequency set based on the abnormal frequency topology; and performing frequency fine-tuning of a corresponding single qubit on each target frequency in the target frequency set, to obtain a calibrated target frequency. In these embodiments, further optimized target frequencies may be obtained by performing frequency fine-tuning of the single qubit in the closed-loop part.

In some embodiments, the quantum circuit is a quantum superconducting circuit, and the multi-bit gate is a two-bit gate.

According to a second aspect of this disclosure, a system for determining operating frequencies of multiple qubits is provided. The system includes: an input module, configured to set, based on a quantum layered structure of a quantum circuit, a corresponding virtual idle layer including a single-bit gate before at least a part of quantum interaction layers in a quantum layer, where the quantum interaction layer includes at least one multi-bit gate; and a frequency determining module, configured to determine, based on a group of idle frequencies that are used for the multiple qubits and that are for the virtual idle layer, a group of operating frequencies that are used for the multiple qubits and that are for the quantum interaction layer.

In some embodiments, setting the corresponding virtual idle layer including the single-bit gate before the at least a part of quantum interaction layers in the quantum layer includes: at least setting one layer of the corresponding virtual idle layer including the single-bit gate before each quantum interaction layer in the quantum layer.

In some embodiments, the frequency determining module further includes: a model construction module, configured to perform the following operations: constructing a topology related to the multiple qubits in a quantum chip at which the quantum circuit is targeted; and constructing, based on the topology and target frequencies that are to be determined, a local frequency error model related to a plurality of error influencing factors of the target frequencies, where the target frequencies are the group of idle frequencies or the group of operating frequencies; and a model optimization module, configured to output a group of initial target frequencies based on the local frequency error model.

In some embodiments, outputting the group of initial target frequencies includes: performing theoretical fidelity simulation on a quantum layer corresponding to the group of initial target frequencies; optimizing, based on a result of the theoretical fidelity simulation, a weighting factor that is in the local frequency error model and that is related to the plurality of error influencing factors; and outputting a group of updated initial target frequencies based on an optimized weighting factor.

In some embodiments, the model optimization module is further configured to perform the following operation: determining the group of updated initial target frequencies as the target frequencies that are to be determined.

In some embodiments, the frequency determining module further includes a closed-loop optimization module, and the closed-loop optimization module is configured to perform the following operations: performing, on an actual platform including the multiple qubits, actual fidelity measurement on a quantum layer corresponding to the group of updated initial target frequencies; and determining the group of updated initial target frequencies as the target frequencies when it is determined that an actual fidelity is within a threshold.

In some embodiments, the actual fidelity measurement includes cross entropy benchmarking (XEB) or randomized benchmarking (RB).

In some embodiments, the closed-loop optimization module is further configured to perform the following operations: when the actual fidelity is not within the threshold, generating an abnormal topology of the group of initial target frequencies; generating a to-be-calibrated target frequency set based on the abnormal topology; and performing frequency fine-tuning of a corresponding single qubit on each target frequency in the target frequency set, to obtain a calibrated target frequency.

In some embodiments, the quantum circuit is a quantum superconducting circuit, and the multi-bit gate is a two-bit gate.

According to a third aspect of this disclosure, a computer-readable medium is provided. The computer-readable medium stores instructions, and when the instructions are executed by a processor, the method according to the first aspect is implemented.

It should be understood that the content described in the summary is not intended to limit key or important features of embodiments of this disclosure or limit the scope of this disclosure. Other features of this disclosure may be readily understood through the following description.

## BRIEF DESCRIPTION OF DRAWINGS

The foregoing and other features, advantages, and aspects of embodiments of this disclosure become more apparent with reference to accompanying drawings and the following detailed description. In the accompanying drawings, same or similar reference numerals indicate same or similar elements.

FIG. 1 is an overall flowchart of a method for determining operating frequencies of multiple qubits according to an example embodiment of this disclosure;

FIG. 2 shows a typical procedure of a further example according to FIG. 1;

FIG. 3 is an overall architectural diagram of a system (also referred to as a frequency allocation FA system), for determining the operating frequencies of the qubits, corresponding to the method in FIG. 1 according to an example embodiment of this disclosure;

FIG. 4 is an overall architectural diagram of a system (also referred to as a frequency allocation FA system), for determining operating frequencies of qubits, including an open-loop part and a closed-loop part, according to an example embodiment of this disclosure;

FIG. 5 is an example flowchart of determining target frequencies by an open-loop optimization module;

FIG. 6 is an example flowchart of further determining target frequencies by a closed-loop optimization module;

FIG. 7 is a diagram of a superconducting qubit with a non-tunable coupler;

FIG. 8a shows a simulation result of change of a fidelity of a single-bit gate with a quantity of bits; and

FIG. 8b shows a simulation result of change of a fidelity of a CZ gate with a quantity of bits.

## DESCRIPTION OF EMBODIMENTS

Embodiments of this disclosure are described in more detail in the following with reference to the accompanying drawings. Although some embodiments of this disclosure are shown in the accompanying drawings, it should be understood that this disclosure can be implemented in various forms, and should not be construed as being limited to embodiments described herein, and instead, these embodiments are provided for a more thorough and complete understanding of this disclosure. It should be understood that the accompanying drawings and embodiments of this disclosure are merely used as examples and are not intended to limit the protection scope of this disclosure.

In the descriptions of embodiments of this disclosure, the term "including" and similar terms thereof shall be understood as non-exclusive inclusions, that is, "including but not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below.

As mentioned above, quantum computing and related research of the quantum computing are one of the most cutting-edge research hotspots in the world. The inventors note that in any quantum algorithm, at least three frequencies need to be selected for each bit: an idle frequency, an interaction frequency, and a read frequency. When the idle frequency is selected, the bit may perform a single-bit gate operation. However, when the bit is adjusted to the interaction frequency, a multi-bit gate such as a two-bit gate may be constructed with a surrounding bit. For a state of the bit, the bit needs to be adjusted to be read when the bit acts with a resonant cavity. Generally, the idle frequency and the interaction frequency may be collectively referred to as an operating frequency of a qubit. Particularly, at a virtual idle layer or a quantum interaction layer that are to be described below, the operating frequency of the qubit may be equivalently interchanged with the idle frequency or the interaction frequency for use.

Particularly, in an implementation process of the quantum algorithm, parallel instruction set control needs to be performed on bits. Therefore, a specific requirement is imposed on a property of the bit and interaction between bits in an instruction set operation. The current research shows that properties including a lifespan of the bit, decoherence, leakage, and crosstalk between bits have strong correlation with a frequency of the bit. Therefore, a fidelity of the instruction set operation of the bit in the quantum algorithm also has strong dependency on the frequency.

Therefore, how to properly allocate an operating frequency of each bit in a quantum chip (for example, a superconducting quantum chip or a quantum circuit) is critical to implementing a high-fidelity quantum instruction set operation, and is also a cornerstone for implementing the quantum algorithm on the quantum chip.

In addition, construction solutions of different qubits also have different requirements on operating frequencies of the qubits. For example, a currently commonly-used construction solution of a superconducting qubit is to connect a Josephson junction and a capacitor in parallel, and select two adjacent energy levels from obtained nonlinear energy levels as states 0 and 1 of the bit respectively. The bit constructed in this method is referred to as a Transmon bit. An inductance of the Transmon bit can be regulated by a superconducting quantum interferometer (SQUID) formed by two Josephson junctions. It is assumed that inductances of the two Josephson junctions are $E_{J1}$ and $E_{J2}$ respectively, and a capacitance of the capacitor connected in parallel with the two Josephson junctions is $E_C$. In this case, a transition

frequency $f_{01}$ between the states 0 and 1 of the bit is determined according to the following formula:

$$f_{01} = \sqrt{8E_C(E_{J1} + E_{J2})|\cos(\pi\Phi_{ext}/\Phi_0)|}$$

$\phi_0$ is a magnetic flux quantum. In this case, a frequency of the bit can be adjusted by applying a magnetic flux $\phi_{ext}$. For a single bit, properly selecting a frequency of the bit may increase tolerance of the frequency to magnetic flux noise, to reduce decoherence. This improves the fidelity. In addition, due to leakage of bit energy relaxation caused by an action of an irregular dielectric inside the Josephson junction, energy relaxation time $T_1$ of the bit jitters with the frequency, and decreases sharply at a specific frequency value. The decrease of the energy relaxation time $T_1$ caused by a two-level system (TLS) defect can reduce a fidelity of a gate. This also needs to be avoided. However, due to correlation of remaining coupling and the like between an adjacent bit and a second adjacent bit with the frequency of the bit, it is far from enough to allocate a frequency by independently considering each bit, and it needs to properly allocate the frequency by considering all bits together.

Therefore, for a quantum chip whose quantity of bits is N, assuming that a frequency range of each chip is divided into M steps, a frequency allocation problem may be mapped to a search problem whose dimension is $M^N$. However, mutual check and balance between influencing factors related to frequency allocation makes optimization of this problem very complex. In addition, after Google and University of Science and Technology of China consecutively launched the 53-bit quantum computer prototype Sycamore and the 66-bit Zuchongzhi in 2019, superconducting quantum computing has officially entered the era of quantum superiority of nearly 100 bits. With further development of a superconducting quantum chip process, a quantity of qubits further increases, and a challenge brought by the frequency allocation problem is further aggravated.

For example, to resolve a bit frequency allocation problem of a large-scale superconducting quantum chip, the Google research team proposes an optimizer, and the optimizer can break down a global optimization search problem into a local limited optimization problem for gradual optimization. However, this method uses a manner of alternately calculating the idle point frequency and the interaction frequency. This has low scalability, and is not applicable to a general algorithm.

Therefore, an efficient and automatic frequency allocation system that can cope with hundreds of thousands of bits is urgently needed in the research field.

Therefore, this disclosure proposes a novel bit frequency allocation solution for a quantum chip or a quantum circuit. In this solution, a virtual quantum idle layer may be used to divide the quantum circuit into a quantum idle layer and a quantum interaction layer, to remove frequency dependency between layers of the quantum circuit. Further, in the solution of this disclosure, the frequency allocation problem may be combined with a local frequency error model to perform open-loop optimization, so as to obtain a more accurate result. Further, in the solution of this disclosure, closed-loop optimization may be further implemented on an actual platform of the quantum circuit, to draw an abnormal topology of a qubit frequency, and then a corresponding fine-tuning module is invoked based on an abnormal type to perform optimization.

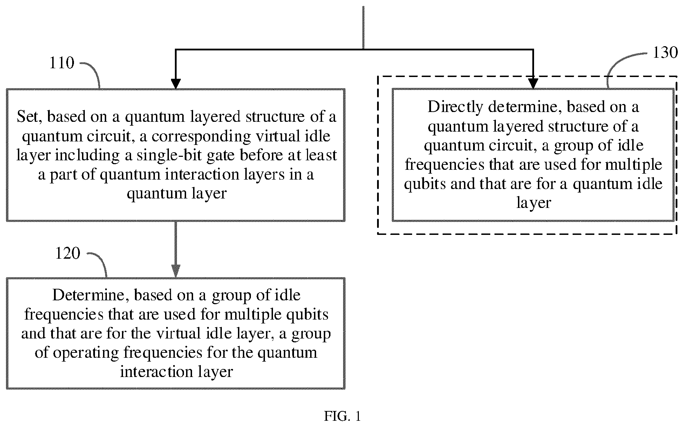

To better understand the technical solutions of this disclosure, FIG. 1 is an overall flowchart of a method for determining operating frequencies of multiple qubits in a quantum circuit according to an example embodiment of this disclosure.

As shown in FIG. 1, in a block 110, a corresponding virtual idle layer including a single-bit gate is set before at least a part of quantum interaction layers in a quantum layer based on a quantum layered structure of a quantum circuit, where each quantum interaction layer includes at least one multi-bit gate.

As well known in the art, the quantum circuit (also referred to as a quantum logic circuit) is a line for performing an operation on a qubit under an abstract concept, and includes a qubit, a line (time line), and various logic quantum gates. It should be understood that, different from a conventional circuit in which a metal wire is connected to transmit a voltage signal or a current signal, in the quantum circuit, the line is connected based on time, that is, a state of the qubit naturally evolves with the time. In this process, the state of the qubit evolves according to an instruction of a Hamiltonian operator until the qubit encounters a logic quantum gate and is operated by the logic quantum gate. The logic quantum gate is a gate that performs a basic calculation operation on the qubit, and may be generally classified into a single-bit gate and a multi-bit gate. As an example, the single-bit gate may include a Hadamard gate, a Pauli-X/Y/Z gate, a revolving X/Y/Z gate, and the like. A two-bit gate includes both a controlled single-bit gate (for example, a CNOT gate) and a switching gate. The single-bit gate and the two-bit gate each may be further extended to a multi-bit gate through extension such as control. It should be noted that measurement is a special quantum gate, and the special quantum gate is irreversible and changes a state of the qubit. Any quantum algorithm is obtained by combining these basic quantum gates.

The qubit in this disclosure may be positioned on a quantum chip. In an example of a superconducting quantum chip, as described above, the qubit may be implemented, for example, using a structure in which a Josephson junction is connected in parallel to a capacitor. In some embodiments, the qubit in this disclosure may be in a one-dimensional structure. In some other embodiments, the qubit in this disclosure may alternatively be in a two-dimensional structure or a three-dimensional structure.

Therefore, for any quantum circuit, the quantum circuit may be layered to obtain at least one quantum layer based on whether simultaneously running is performed on the time line. Further, whether each quantum layer is classified as a quantum idle layer or a quantum interaction layer may be determined based on whether the quantum layer includes a single-bit gate or includes a multi-bit gate. The quantum idle layer is defined as a layer including only a single-bit gate, and the quantum interaction layer is defined as a layer including at least one multi-bit gate. The quantum circuit may be divided into a plurality of quantum layers including the quantum idle layer and the quantum interaction layer. In particular embodiments, it is also possible that the quantum circuit includes only the quantum idle layer or only the quantum interaction layer.

Generally, when an operation on the qubit moves from a previous layer to a next layer along a time line, frequency allocation of the qubit at the next layer is often designed as depending on an allocated frequency in the previous layer line, and such dependency may result in complex calculation of the allocated frequency of the qubit and/or crosstalk caused by an intersection of allocated frequencies between layers.

Therefore, one of the concepts of this disclosure is to remove frequency allocation dependency between layers, in particular, allocation dependency of a quantum interaction layer as a next layer on an operating frequency (for example, a quantum interaction frequency) of a quantum interaction layer as a previous layer. For the quantum idle layer including only the single-bit gate, an idle frequency may be directly optimized without considering frequency allocation dependency of the previous layer. For the quantum interaction layer including the multi-bit gate, the situation is more complex and common. Therefore, the focus of this disclosure is how to remove frequency allocation dependency of at least one quantum interaction layer on its previous layer. Since frequency allocation dependency between the layers is removed, frequency allocation or determining of each layer may be simplified, and in particular, determining (calculation or allocation) of operating frequencies that are for the at least a part of quantum interaction layers and that are used for the qubits may be simplified.

Herein, the inventors propose that the virtual idle layer including the single-bit gate is set (or inserted) before a quantum layer corresponding to the operating frequency that is of the qubit and that needs to be determined (calculated or allocated), to remove frequency allocation dependency between the layers. It should be noted that, "virtual" in the virtual idle layer herein means that the virtual idle layer is not a real quantum layer in a quantum circuit (or a quantum algorithm) but a layer that is virtually set for a purpose of operating frequency allocation of the qubit. The virtual idle layer exists only in allocation, calculation, or determining for determining the frequency of the qubit. It is intended to enable, based on an operation at the virtual idle layer, a frequency of the qubit at the virtual idle layer to be an idle frequency at which the qubit is operated for a single-bit gate or an idle frequency that maintains in an idle state. In addition, because the virtual idle layer is a layer including the single-bit gate, frequency calculation for an actual quantum idle layer may be equivalently processed with frequency calculation for the virtual idle layer. This means that a frequency determining (calculation or allocation) solution for the actual quantum idle layer may be referenced from a frequency determining (calculation or allocation) solution for the virtual idle layer, or vice versa.

It should be noted herein that the terms "previous layer", "next layer", "before", or "after" in this disclosure are all expressed with respect to the time line of the quantum circuit, where "previous layer" and "before" represent being upstream of the time line of the quantum circuit relative to the related layer, and "next layer" and "after" represent being downstream of the time line of the quantum circuit. In addition, unless explicitly stated, the expression "setting (or inserting) the virtual idle layer before ..." or the like usually refers to setting (or inserting) the virtual idle layer immediately before the related layer.

In some embodiments, it may be sufficient to set (or insert) a corresponding virtual idle layer including a single-bit gate before at least a part of quantum interaction layers. This is because not all quantum interaction layers are preceded by another quantum interaction layer that affects frequency allocation of the quantum interaction layer. For example, effect of an actual quantum idle layer immediately existing before the quantum interaction layer may be equivalent to setting (or inserting) the virtual idle layer. In this case, it may not be necessary to set (or insert) the corresponding virtual idle layer before the quantum interaction layer. Apparently, in some embodiments, it may be more advantageous to set one layer of the corresponding virtual idle layer including the single-bit gate before each quantum interaction layer in the quantum layer. This is because, in this case, that an impact situation of a frequency of the layer before each quantum interaction layer on the quantum interaction layer may not be necessarily distinguished. Thus, in some embodiments, the step in the block 110 may also be further embodied as: determining whether at least one quantum layer includes a quantum interaction layer (or a multi-bit gate); and setting (or inserting) one layer of corresponding virtual idle layer including a single-bit gate before at least a part of quantum interaction layers (even all interaction layers) when it is determined that the quantum layer includes the quantum interaction layer (or the multi-bit gate).

In a further embodiment, it is also possible to set one layer of corresponding virtual idle layer including a single-bit gate before each layer (including the quantum idle layer) in the foregoing quantum layer. In this case, there is no need to distinguish whether each layer is the quantum interaction layer or the quantum idle layer, and there is no need to distinguish an impact situation of the previous layer on a frequency of the next layer. In other words, in the foregoing manner, when the operating frequency (including an idle frequency of the quantum idle layer and an interaction frequency of the quantum interaction layer) of the layer that is to be determined is determined (calculated or allocated), frequency allocation dependency on the previous layer may be eliminated. This is very beneficial to further optimize the operating frequency of the layer that is to be determined, so as to more efficiently determine a group of operating frequencies of qubits corresponding to the quantum layer.

Once the corresponding virtual idle layer is set (or inserted), a group of operating frequencies that are used for the multiple qubits and that are for the quantum interaction layer are determined based on a group of idle frequencies that are used for the multiple qubits and that are for the virtual idle layer in a block 120. In some embodiments, the foregoing group of idle frequencies for the virtual idle layer may be pre-determined and stored in a memory. In yet another embodiment, the foregoing group of idle frequencies for the virtual idle layer may be redetermined (allocated or calculated).

It can be learned from the foregoing description that the virtual idle layer is disposed before the corresponding quantum interaction layer. Therefore, although an operating frequency that is for the quantum interaction layer and that is of a qubit does not depend on an operating frequency corresponding to an actual quantum layer of the previous layer, but depends on an idle frequency of a qubit corresponding to the virtual idle layer. Therefore, the group of operating frequencies that are used for the multiple qubits and that are for the quantum interaction layer is to be determined after the group of idle frequencies for the virtual idle layer are determined or obtained.

The steps in the blocks 110 and 120 above are all discussed for the case in which the quantum layer is the quantum interaction layer. If it is determined that the quantum layer is the quantum idle layer, a group of idle frequencies that are used for the multiple qubits may be directly determined (optimized) for the quantum idle layer in a block 130.

Whether the group of operating frequencies for the quantum interaction layer, the group of idle frequencies for the virtual idle layer, or the group of idle frequencies for the quantum idle layer may be used as target frequencies that are processed by various optimization algorithms and/or models. As an example, the optimization algorithm may include, for example, an optimization algorithm for constructing a cost function. In particular, as may be described below, in some embodiments, any one of the group of operating frequencies for the quantum interaction layer, the group of idle frequencies for the virtual idle layer, and the group of idle frequencies for the quantum idle layer in this disclosure may be used as target frequencies to be determined through open-loop optimization including the local frequency error model in this disclosure and/or further in combination with closed-loop optimization for performing abnormal frequency diagnosis.

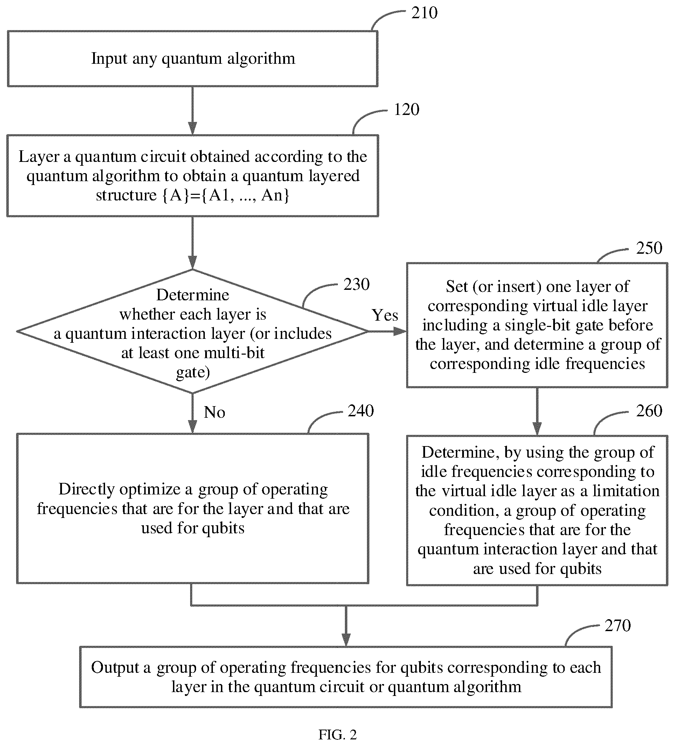

As an example only, FIG. 2 shows a typical procedure of a further example according to FIG. 1.

As shown in FIG. 2, in a block 210, any quantum algorithm may be input. It is easy to understand that each logic quantum gate calculation in the quantum algorithm may substantially constitute a main part of a quantum circuit. Therefore, a specific composition of the quantum circuit may be learned of according to the input quantum algorithm.

In a block 220, the quantum circuit obtained according to the quantum algorithm may be layered to obtain a quantum layered structure {A}={A1, ..., An}. A1 to An represent actual layers of the quantum circuit and include types of gates and corresponding positions of the gates, respectively.

In a block 230, for each layer in the quantum layered structure {A}, it may be determined whether the layer is a quantum interaction layer (or includes at least one multi-bit gate).

Once it is determined that the layer is not the quantum interaction layer (that is, indicating that the layer is a quantum idle layer), a group of operating frequencies that are for the quantum idle layer and that are used for qubits may be directly optimized in a block 240. If it is determined that the layer is the quantum interaction layer, in a block 250, one layer of corresponding virtual idle layer including a single-bit gate may be set (or inserted) before the layer, and a group of idle frequencies that are for the virtual idle layer and that are used for qubits are determined. Further, in a block 260, a group of operating frequencies that are for the quantum interaction layer and that are used for qubits are determined by using the group of idle frequencies corresponding to the virtual idle layer as a limitation condition. Therefore, in a block 270, a group of operating frequencies for qubits corresponding to each layer in the quantum circuit or quantum algorithm may be output.

It is easy to understand that, in some embodiments, the step of determining the group of idle frequencies for the virtual idle layer in the block 260 may be performed according to a same algorithm or model as that in the block 240 in which the group of operating frequencies for the quantum idle layer are directly optimized. In some other embodiments, if the group of operating frequencies for the quantum idle layer or the group of idle frequencies for the virtual idle layer have been obtained previously, the step of determining the group of idle frequencies for the virtual idle layer in the foregoing block 260 may include: invoking the group of previously obtained operating frequencies for the quantum idle layer or the group of idle frequencies for the virtual idle layer. In this manner, the foregoing group of idle frequencies does not need to be repeatedly calculated or optimized.

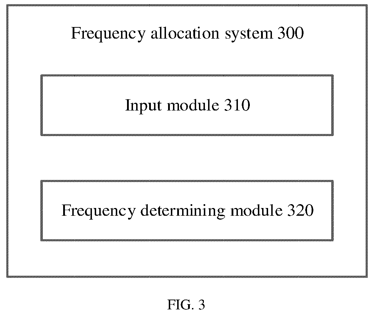

FIG. 3 is an overall architectural diagram of a system (also referred to as a frequency allocation FA system), for determining the operating frequencies of the qubits, corresponding to the method in FIG. 1 according to an embodiment of this disclosure.

As shown in FIG. 3, a frequency allocation system 300 may mainly include an input module 310 and a frequency determining module 320.

Specifically, the input module 300 may be configured to set, based on a quantum layered structure of a quantum circuit, a corresponding virtual idle layer including a single-bit gate before at least a part of quantum interaction layers in a quantum layer, where the quantum interaction layer includes at least one multi-bit gate.

The frequency determining module 320 may be configured to determine, based on a group of idle frequencies that are used for the multiple qubits and that are for the virtual idle layer, a group of operating frequencies that are used for the multiple qubits and that are for the quantum interaction layer. In addition, the frequency determining module 320 may be further configured to directly determine a group of idle frequencies that are used for the multiple qubits and that are for the quantum idle layer. In some embodiments, determining the group of operating frequencies that are used for the multiple qubits and that are for the quantum interaction layer may include obtaining a group of idle frequencies that are used for the multiple qubits and that are for the virtual idle layer, and then determining the group of operating frequencies for the quantum interaction layer based on the group of idle frequencies for the virtual idle layer.

It is easy to understand that the input module 310 and the frequency determining module 320 may operate at least by using method steps corresponding to the method steps for determining the operating frequencies of the qubits in FIG. 1, and may achieve substantially the same technical effect. Therefore, details are not described herein again.

As described above, whether the group of operating frequencies for the quantum interaction layer or the group of idle frequencies for the virtual idle layer (or the group of operating frequencies for the quantum idle layer) may be determined as target frequencies to be determined through open-loop optimization and/or closed-loop optimization of this disclosure.

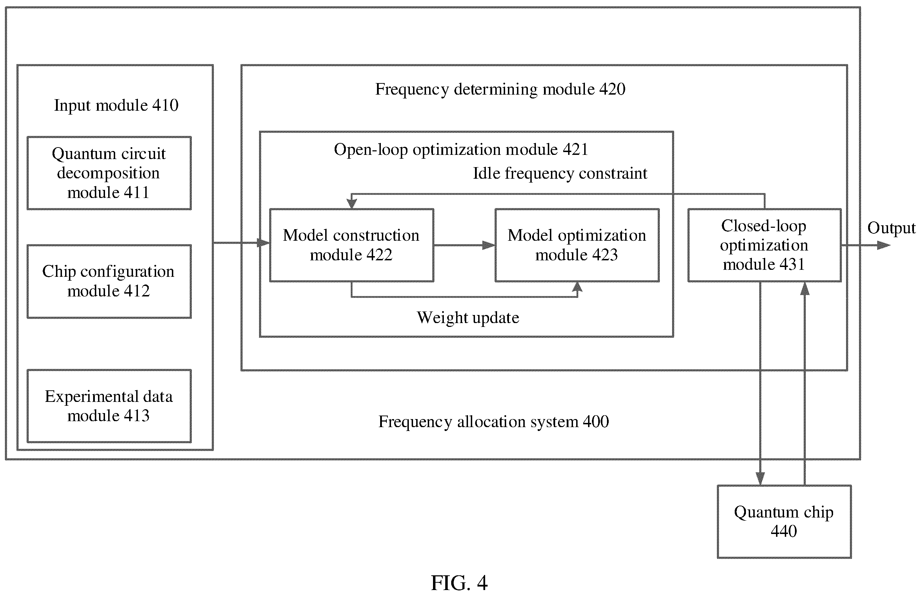

Therefore, as a further detailed example of FIG. 3, FIG. 4 is an overall architectural diagram of a system (also referred to as a frequency allocation FA system), for determining operating frequencies of qubits, including an open-loop module and a closed-loop module, according to an embodiment of this disclosure.

As shown in FIG. 4, a system 400 for determining operating frequencies of qubits may mainly include an input module 410 and a frequency determining module 420.

Further, the input module 410 may include at least a quantum circuit decomposition module 411, a chip configuration module 412, and an experimental data module 413.

The quantum circuit decomposition module 411 may be configured to perform a layering function of a quantum circuit (or an input quantum algorithm) to be performed on a quantum chip to obtain a quantum layered structure including at least one quantum layered layer. Particularly, the at least one quantum layer may include a quantum interaction layer, where the quantum interaction layer includes at least one multi-bit gate. Further, the quantum circuit decomposition module 411 may be further configured to set a corresponding virtual idle layer including a single-bit gate before at least a part of quantum interaction layer in the at least one quantum layer. Based on the virtual idle layer, frequency allocation dependency between a layer corresponding to the operating frequencies that are to be determined and a previous actual quantum layer can be removed.

The chip configuration module 412 may be configured to output chip configuration parameter information. The experimental data module 413 may be configured to output experimental data including a lifespan of the qubit, coherence time, and the like. The foregoing chip configuration parameter information and experimental data may be used to subsequently construct a local frequency error model related to a plurality of error influencing factors, as further described below.

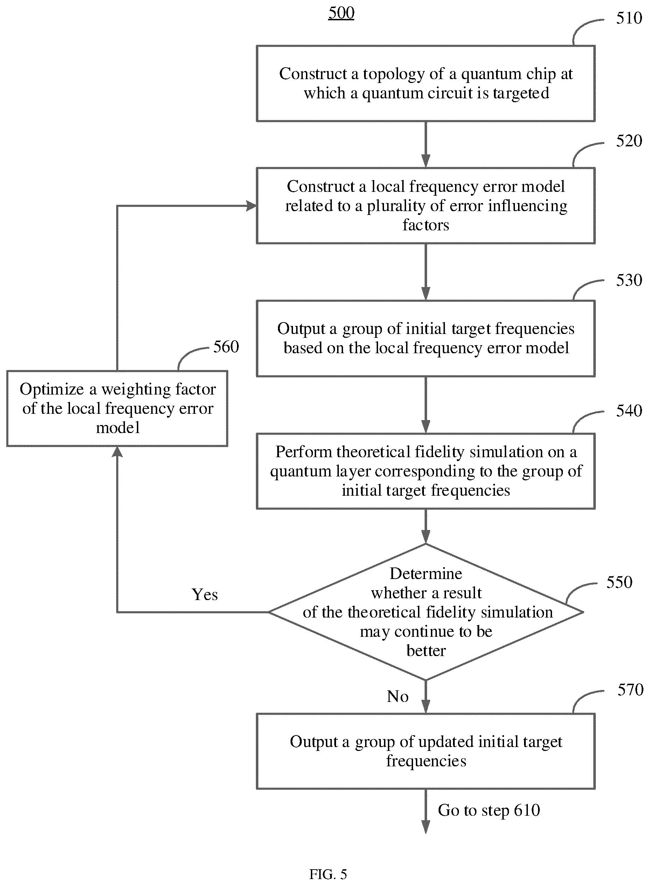

The frequency determining module 420 may further include an open-loop optimization module 421 and an optional closed-loop optimization module 431. An objective of the open-loop optimization module 421 is to obtain a group of initial target frequencies based on the constructed local frequency error model. In some embodiments, the group of initial target frequencies may be optimized and may be directly determined as the target frequencies that are to be determined above for outputting from the frequency allocation FA system. In a further embodiment, the foregoing group of initial target frequencies may be input to the optional closed-loop optimization module 431, and the optional closed-loop optimization module 431 may perform actual fidelity measurement on an actual platform including multiple qubits (for example, a platform including a quantum chip 440), to perform abnormal frequency diagnosis, and then further optimize the foregoing target frequencies for output, as further described below with reference to FIG. 5. It should be noted herein that the term "open-loop" in this specification does not require the actual measurement on the quantum chip, but the term "closed-loop" requires the actual measurement on the quantum chip.

In some embodiments, the open-loop optimization module 421 may further include a model construction module 422 and a model optimization module 423.

Specifically, the model construction module 422 may be configured to construct, based on data of the input module 410 (particularly, the chip configuration module 412), a topology related to multiple qubits on the quantum chip, and may construct, based on the topology and the target frequencies that are to be determined, the local frequency error model related to the plurality of error influencing factors.

As an example, assuming that an error model of a single error influencing factor is fi(i), an overall error model f may be constructed, for example, by linearly superposing all single error influencing factor models fi(i), that is,

$$f = \sum_i Ci * f_i(i)$$

. Ci is a weighting factor related to a corresponding error influencing factor.

An objective of the model optimization module 423 is to output a group of initial target frequencies based on the local frequency error model. In some embodiments, the weighting factor Ci may be directly set manually or depending on experience, and then a group of initial operating frequencies are output based on the local frequency error model. In a further embodiment, outputting the group of initial target frequencies may further include: performing theoretical fidelity simulation on a quantum layer corresponding to the group of initial target frequencies; optimizing, based on a result of the theoretical fidelity simulation, a weighting factor that is in the local frequency error model and that is related to the plurality of error influencing factors; and then outputting a group of updated initial target frequencies based on an optimized weighting factor. In some embodiments, the foregoing group of initial target frequencies or group of updated initial target frequencies may be determined as the foregoing target frequencies by the FA system, to complete a task of determining (calculating or allocating) the target frequencies.

Further, in some embodiments, the frequency determining module 420 may further include a closed-loop optimization module 431, and the closed-loop optimization module 431 may be configured to perform the following operations: performing, on an actual platform including the multiple qubits, actual fidelity measurement on a quantum layer corresponding to the group of updated initial target frequencies; and when it is determined that an actual fidelity is within a threshold, determining the group of updated initial target frequencies as the target frequencies that are to be determined. In some embodiments, the actual fidelity measurement may include cross entropy benchmarking (XEB) or randomized benchmarking (RB). It is easy to understand that in another embodiment, there may be another test method for the actual fidelity measurement.

Further, the closed-loop optimization module 431 may be further configured to perform the following operations: when the actual fidelity is not within the threshold, generating an abnormal topology of the group of initial target frequencies; generating a to-be-calibrated target frequency set based on the abnormal topology; and performing frequency fine-tuning of a corresponding single qubit on each target frequency in the target frequency set, to obtain a calibrated target frequency. In some embodiments, the foregoing frequency fine-tuning of the single qubit may be performed by a single qubit fine-tuning module. In some embodiments, a fine-tuning library may be established based on bit abnormality, to correct the bit abnormality in a targeted manner.

Further, the closed-loop optimization module 431 may be further configured to perform the following operation: in response to a case in which the updated target frequency set is empty, outputting a group of target frequencies that are obtained through fine-tuning on the single qubit.

According to the foregoing description, it may be understood that it is also possible to determine a group of target frequencies by the open-loop optimization module 421 instead of the closed-loop optimization module 431. However, compared with frequency determining (or optimization) performed only by the foregoing open-loop optimization module 421, fidelities of gates or layers corresponding to the group of target frequencies output by the closed-loop optimization module 431 are higher.

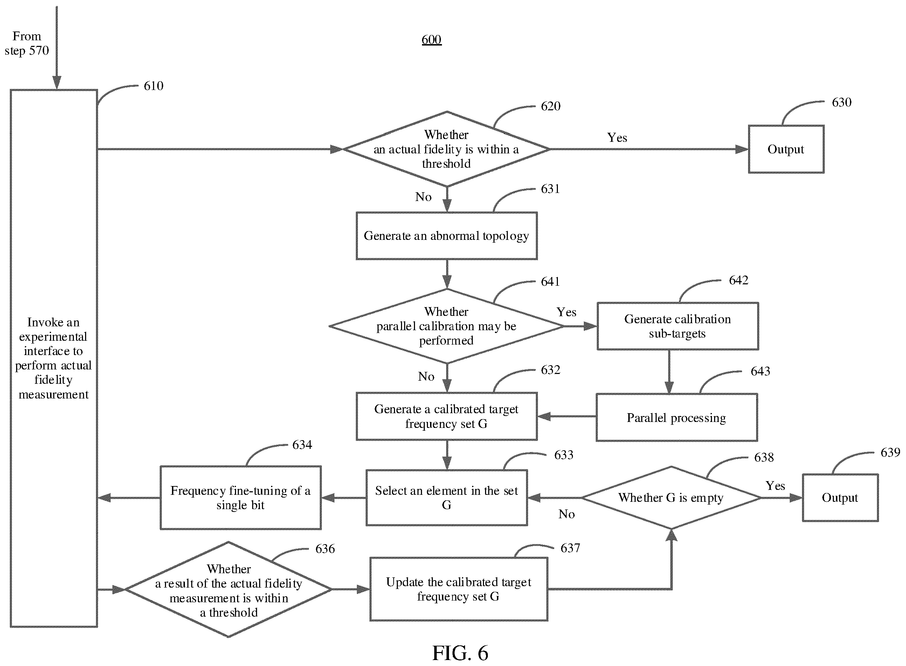

To more clearly understand an operation process of the frequency determining module 420, particularly, the open-loop optimization module 421 and the closed-loop optimization module 431, for example, the following describes a schematic flowchart of determining target frequencies used for a plurality of bits according to an example embodiment of this disclosure with reference to FIG. 5 and FIG. 6. FIG. 5 mainly describes an example flowchart of determining the target frequencies by the open-loop optimization module. FIG. 6 mainly describes an example flowchart of further determining the target frequencies by the closed-loop optimization module.

As described above, the target frequencies may be any one of the group of operating frequencies that are used for the multiple qubits and that are for the quantum interaction layer, the group of idle frequencies for the virtual idle layer, or the group of operating frequencies for the quantum idle layer.

In an example shown in FIG. 5, a method 500 performed by the open-loop optimization module 421 may include the following steps.

In a block 510, a topology related to the multiple qubits in a quantum chip at which the quantum circuit is targeted is constructed. In the block 510, the constructing may be performed based on the data of the input module 410 (for example, chip configuration parameter data). As described above, the data of the input module 410 may include at least the data of the quantum circuit decomposition module 411, the chip configuration module 412, the experimental data module 413, and the like.

In a block 520, a local frequency error model related to a plurality of error influencing factors of the target frequencies is constructed based on the topology and the target frequencies that are to be determined. As an example only, in some embodiments, an overall error model f may be constructed, for example, by linear superposing of all single error

$$f = \sum_i Ci * f_i(i)$$

influencing factor models $f_i(i)$, that is, there is . Ci is a weighting factor i related to a corresponding error influencing factor.

In a block 530, a group of initial target frequencies are output based on the local frequency error model. In this step, the weighting factor of the local frequency error model may be randomly specified, or may be preset depending on experience. It is easy to understand that, in some embodiments, the group of initial target frequencies may be directly output as the target frequencies that are to be determined by the open-loop optimization module 421 for output.

However, in some other embodiments, the method 500 may further include the following steps.

In a block 540, theoretical fidelity simulation on a quantum layer corresponding to the group of initial target frequencies may be performed. It is easy to understand that advantages and disadvantages of allocation of the foregoing group of initial target frequencies may be learned of based on a theoretical simulation result.

Therefore, in a block 550, it may be further determined whether the result of the theoretical fidelity simulation may continue to be better. If yes, the weighting factor of the local frequency error model may be optimized in a block 560, and a ratio of the optimized weighting factor is returned to the block 520 to reconstruct a local frequency error model using the optimized weighting factor. In some embodiments, the weighting factor ratio may be optimized according to an optimization algorithm. For example, the optimization algorithm may be, for example, a Bayesian (Bayesian) optimization algorithm.

Once it is determined that the simulation result cannot continue to be better in the block 550, a group of updated initial target frequencies may be output in a block 570.

It is easy to understand that the foregoing group of updated initial target frequencies has more optimized fidelity effect than the foregoing group of initial target frequencies obtained based on a fixed weighting factor ratio. Therefore, it is more advantageous to output the group of updated initial target frequencies as the target frequencies that are to be determined by the open-loop optimization module 421.

Further, in some embodiments, the foregoing group of updated initial target frequencies may be output to the closed-loop optimization module 431 for further optimization. As shown in FIG. 6, steps of the method 600 performed by the closed-loop module 431 may include the following steps.

In a block 610, actual fidelity measurement is performed, on an actual platform including the multiple qubits (quantum chips), on a quantum layer corresponding to the group of updated initial target frequencies. In some embodiments, an experimental interface may be invoked to make the actual fidelity measurement of the quantum layer corresponding to the group of updated initial target frequencies as described above. As an example, the foregoing actual fidelity measurement may be performed, for example, by using cross entropy benchmarking (XEB) or randomized benchmarking (RB). It is easy to understand that, impact of an operating environment in which the qubit is located on the operating frequency of the qubit may be more truly reflected through the actual fidelity measurement.

In a block 620, it may be determined whether an actual fidelity is within a threshold. In some embodiments, the foregoing threshold may be set based on a requirement of actual application or depending on experience.

In a block 630, once it is determined that the above actual fidelity is within the threshold, the group of updated initial target frequencies may be determined as the target frequencies that are to be determined by the closed-loop optimization module 431 (or FA system) for output. Otherwise, in a block 631, an abnormal topology of the target frequencies may be generated. Further, in a block 632, a to-be-calibrated target frequency set G may be generated based on the abnormal topology. Further, in a block 633, a target frequency in the target frequency set G may be selected, and frequency fine-tuning of a corresponding single qubit is performed in a block 634, to obtain a calibrated target frequency. At the same time, for the obtained calibrated target frequency, the block 610 is returned to perform the actual fidelity measurement again, and in a block 636, whether a result of the actual fidelity measurement performed again is within a threshold is determined. Further, in a block 637, the calibrated target frequency set G may be updated based on the result of the actual fidelity measurement performed again. Then, in a block 638, it is determined whether the updated calibration target set G is empty. If the updated calibration target set G is not empty, the block 633 is returned to continue to select the target frequency in the target frequency set G. Otherwise, in a block 639, a group of target frequencies that are obtained through fine-tuning by a single-bit module is output as the group of target frequencies that are to be determined by the closed-loop optimization module 431.

In some embodiments, after the to-be-calibrated target frequency set G is generated in the block 632, it may be further determined whether abnormal target frequencies in the abnormal topology can be calibrated in parallel in a block 641. If no, the to-be-calibrated target frequency set G may be further generated based on the abnormal topology in the block 632. If yes, calibrated sub-targets may be further generated in a block 642. Then, in a block 643, the calibrated sub-targets are encapsulated in parallel, and then the to-be-calibrated target frequency set G is output. It is easy to understand that, in this manner, when there is no crosstalk between the sub-targets in the to-be-calibrated target frequency set G, different sub-targets may be selected at the same time, and corresponding single-bit frequency fine-tuning operations are performed in parallel. This improves calibration efficiency of the to-be-calibrated target frequency set G.

The foregoing has described in detail the method and the related system for determining the operating frequencies of the qubits according to embodiments of this disclosure. It may be understood that, in the method and the related system disclosed in this disclosure, the operating frequencies of the multiple qubits can be more accurately and efficiently determined (or allocated).

Some verification examples are provided below to better understand advantages of the solutions of this disclosure.

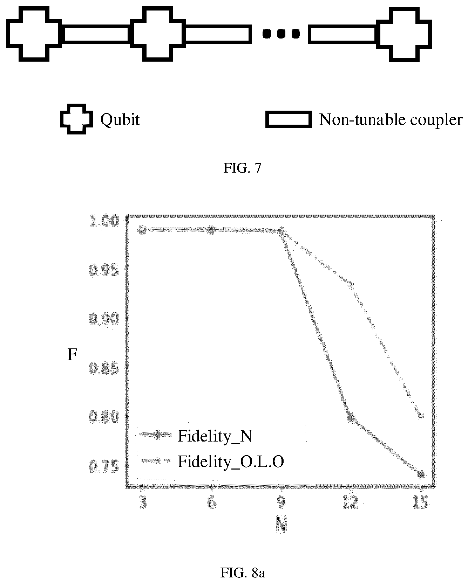

It is assumed that a superconducting quantum chip with a non-tunable coupler shown in FIG. 7 is used as a verification object. For the quantum chip, because bits are coupled together via a capacitor, coupling strength between the bits is fixed. Certainly, verification of another type of the quantum chip is also possible, and the quantum chip includes but is not limited to a superconducting quantum chip with a tunable coupler and a superconducting quantum chip with a non-tunable coupler. Herein, it is further assumed that a topology structure of the quantum chip that is to be verified is a one-dimensional chain structure including N bits, to simplify corresponding verification.

First, verification is performed on idle frequencies (or the foregoing virtual idle frequencies) of multiple qubits corresponding to a single-bit gate on such chip.

As described above, the foregoing algorithm, chip topology information, and a parameter required for modeling may be input into the FA system in this disclosure, to obtain a group of idle frequencies $\{f_0, ..., f_{N-1}\}$ of qubits.

To test actual effect of an open-loop optimization part in the present invention, a ratio of the weighting factor in the local error frequency model may be fixed to obtain a new group of idle frequencies $\{f_0, ..., f_{N-1}\}_N$ of qubits through recalculation as comparison references. Then, a fidelity may be calculated by performing dynamics simulation on the FA system, to compare the two groups of calculated frequencies. For the single-bit gate, the following fidelity calculation formula may be used:

$$F = \left( \frac{\mathrm{Tr}(M_{real}^{-1} M_{ideal}) + \mathrm{d}}{[\mathrm{d}(\mathrm{d} + 1)]} \right)$$

$M_{real}$ and $M_{ideal}$ are a PTM matrix that is of the single-bit gate and that is obtained through simulation based on an obtained bit frequency and an ideal PTM matrix of the single-bit gate, and d is a dimension of each gate. For a single-bit gate of two-energy level bits, d=2.

FIG. 8a shows a simulation result of change of a fidelity of a single-bit gate with a quantity of bits. A dashed line and a solid line show respectively change relationships between the frequency obtained by the open-loop optimization module (marked as a fidelity_O.L.O) of this disclosure and a quantity N of bits and between a fidelity F of the frequency obtained through calculation by the foregoing fixed model (marked as a fidelity_N) and the quantity N of bits.

Next, correspondingly used operating frequencies of multiple qubits are verified by using a two-bit CZ gate on such chip as an example.

Generally, in an actual algorithm, to avoid crosstalk between two adjacent two-bit gates, a case in which the two two-bit gates act respectively on two adjacent bits in a same layer of line does not occur. Therefore, a case in which two CZ gates are separated by one single-bit gate is considered herein. Similar to the foregoing case of verifying the single-bit gate, a group of operating frequencies {fint} corresponding to all two-bit CZ gates may be output based on the FA system disclosed of this disclosure. Accordingly, a group of referenced operating frequencies {fint}_N may be obtained by fixing a model ratio. For the two-bit CZ gate, the following fidelity calculation formula may be used:

$$F = \left| Tr\left(\frac{1}{4} U_{CZ}^\dagger U\right) \right|^2$$

U is a matrix representing the CZ gate.

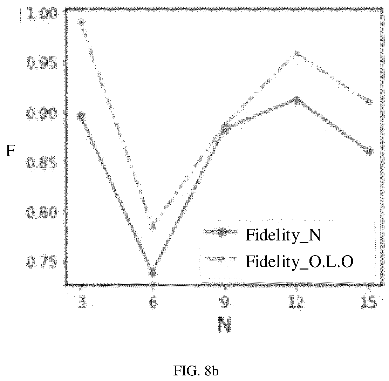

FIG. 8b shows a simulation result of change of a fidelity of a CZ gate with a quantity of bits. A dashed line and a solid line show respectively change relationships between the frequency obtained by the open-loop optimization module (marked as a fidelity_O.L.O) of this disclosure and a quantity N of bits and between a fidelity F of the frequency obtained through calculation by the foregoing fixed model (marked as a fidelity_N) and the quantity N of bits.

It can be learned from FIG. 8a and FIG. 8b that, whether the fidelity obtained after the idle point frequency is allocated or the fidelity obtained after the operating frequency (interaction frequency) is allocated indicates that, compared with the method for fixing the ratio of the weighting factor of the error frequency model, the solution of this disclosure can improve fidelity effect corresponding to frequency allocation.

In addition, this disclosure further performs an idle frequency allocation experiment on an actual eight-bit chip with a non-tunable coupler. Table 1 shows comparison between a frequency allocation graph obtained according to the solution of this disclosure and a frequency selected through conventional manual adjustment. It can be learned from Table 1 that, in the solution of this disclosure, an error (1-F) of the conventional method can be reduced by one time. In addition, compared with a conventional manual adjustment method that requires several days of time, the solution of this disclosure can obtain a better frequency allocation result only in approximately 10s.

Table 1

| | Q1 (GHz) | Q2 (GHz) | Q3 (GHz) | Q4 (GHz) | Q5 (GHz) | Q6 (GHz) | Q7 (GHz) | Q8 (GHz) | 1-F |
|---|---|---|---|---|---|---|---|---|---|
| This disclosure | 5.207 | 4.462 | 5.515 | 4.535 | 5.105 | 4.350 | 5.065 | 4.312 | 0.307% |
| Conventional method | 5.208 | 4.481 | 5.150 | 4.534 | 5.107 | 4.462 | 5.038 | 4.476 | 0.704% |

Embodiments of the solution of this disclosure have been described in detail above. It may be understood that much beneficial technical effect can be achieved according to the solution of this disclosure. For example, an inserted virtual idle layer technology can effectively remove frequency allocation dependency between layers, and the technology can be extended to any quantum circuit. For another example, a simulation technology used in the open-loop optimization part may improve accuracy of a preliminary result provided by the open-loop optimization part. This can save fine-tuning time of the subsequent closed-loop optimization part. For another example, the closed-loop optimization module can effectively parallelly process abnormality of bit frequencies, to accurately and efficiently find a near-optimal solution of the experiment. For another example, different abnormal bit adjustment modules provided in this disclosure may adaptively process different abnormal types.

The foregoing mainly describes the method in this disclosure in a manner of flowcharts. It should be understood that these procedures are merely examples. In addition, although the specification describes the steps of the method in a particular order, this does not require or imply that the operations need to be performed in that particular order, or that all of the shown operations need to be performed to achieve a desired result, rather, the described steps may change the order of execution. Additionally or alternatively, some steps may be omitted, a plurality of steps may be combined into one step for execution, and/or one step may be broken down into a plurality of steps for execution. In addition, functions of the FA system in this disclosure are described in a form of modules. It should be understood that a plurality of functions described in this disclosure may be performed in a single module, or may be performed in a form of a plurality of modules. In addition, the solutions described in this disclosure may further relate to a computer-readable medium. The computer-readable medium may store instructions, and when the instructions are executed by a processor, the method described in this disclosure is implemented.

Although the present invention has been illustrated and described in detail in the accompanying drawings and the foregoing descriptions, such illustrations and descriptions should be regarded to be illustrative or example rather than limiting. The present invention is not limited to the disclosed embodiments. When practicing the claimed invention, a person skilled in the art can understand and practice other variations of the disclosed embodiments by studying the accompanying drawings, the disclosure, and the appended claims.

In the claims, the word "comprise" does not exclude other elements, and the indefinite article "a" or "an" does not exclude a plurality. Single element or other units may fulfill the functions of a plurality of items set forth in the claims. The mere fact that some features are only described in mutually different embodiments or dependent claims does not mean that a combination of these features cannot be advantageously used. Without departing from the spirit and scope of this application, the protection scope of this application covers any possible combination of features disclosed in various embodiments or dependent claims.

Further, any reference numeral in the claims should not be construed as limiting the scope of the present invention.

**Claims**

1. A method for determining operating frequencies of multiple qubits, comprising:

    setting, based on a quantum layered structure of a quantum circuit, a corresponding virtual idle layer comprising a single-bit gate before at least a part of quantum interaction layers in a quantum layer, wherein each quantum interaction layer comprises at least one multi-bit gate; and
    determining, based on a group of idle frequencies that are used for the multiple qubits and that are for the virtual idle layer, a group of operating frequencies that are used for the multiple qubits and that are for the quantum interaction layer.

2. The method according to claim 1, wherein the setting a corresponding virtual idle layer comprising a single-bit gate before at least a part of quantum interaction layers in a quantum layer comprises:
   at least setting one layer of the corresponding virtual idle layer comprising the single-bit gate before each quantum interaction layer in the quantum layer.

3. The method according to claim 1, wherein the group of operating frequencies are used as target frequencies, and determining the target frequencies comprises:

constructing a topology related to the multiple qubits in a quantum chip at which the quantum circuit is targeted;
constructing, based on the topology and the target frequencies that are to be determined, a local frequency error model related to a plurality of error influencing factors of the target frequencies; and
obtaining a group of initial target frequencies based on the local frequency error model.

4. The method according to claim 3, wherein the obtaining a group of initial target frequencies comprises:

performing theoretical fidelity simulation on a quantum layer corresponding to the group of initial target frequencies;
optimizing, based on a result of the theoretical fidelity simulation, a weighting factor that is in the local frequency error model and that is related to the plurality of error influencing factors; and
obtaining a group of updated initial target frequencies based on an optimized weighting factor.

5. The method according to claim 3 or 4, wherein determining the target frequencies further comprises:
determining the group of updated initial target frequencies as the target frequencies that are to be determined.

6. The method according to claim 3 or 4, wherein determining the target frequencies further comprises:

performing, on an actual platform comprising the multiple qubits, actual fidelity measurement on a quantum layer corresponding to the group of updated initial target frequencies; and
determining the group of updated initial target frequencies as the target frequencies when it is determined that an actual fidelity is within a threshold.

7. The method according to claim 6, wherein the actual fidelity measurement comprises cross entropy benchmarking (XEB) or randomized benchmarking (RB).

8. The method according to claim 6, wherein determining the target frequencies further comprises:

when the actual fidelity is not within the threshold, generating an abnormal topology of the target frequencies;
generating a to-be-calibrated target frequency set based on the abnormal frequency topology; and
performing frequency fine-tuning of a corresponding single qubit on each target frequency in the target frequency set, to obtain a calibrated target frequency.

9. The method according to any one of claims 1 to 4, 7, and 8, wherein the quantum circuit is a quantum superconducting circuit, and the multi-bit gate is a two-bit gate.

10. A system for determining operating frequencies of multiple qubits, comprising:

an input module, configured to set, based on a quantum layered structure of a quantum circuit, a corresponding virtual idle layer comprising a single-bit gate before at least a part of quantum interaction layers in a quantum layer, wherein the quantum interaction layer comprises at least one multi-bit gate; and
a frequency determining module, configured to determine, based on a group of idle frequencies that are used for the multiple qubits and that are for the virtual idle layer, a group of operating frequencies that are used for the multiple qubits and that are for the quantum interaction layer.

11. The system according to claim 10, wherein setting the corresponding virtual idle layer comprising the single-bit gate before the at least a part of quantum interaction layers in the quantum layer comprises:
at least setting one layer of the corresponding virtual idle layer comprising the single-bit gate before each quantum interaction layer in the quantum layer.

12. The system according to claim 10, wherein the frequency determining module further comprises:
a model construction module, configured to perform the following operations:

constructing a topology related to the multiple qubits in a quantum chip at which the quantum circuit is targeted; and

constructing, based on the topology and target frequencies that are to be determined, a local frequency error model related to a plurality of error influencing factors of the target frequencies, wherein the target frequencies are the group of idle frequencies or the group of operating frequencies; and

a model optimization module, configured to output a group of initial target frequencies based on the local frequency error model.

13. The method according to claim 12, wherein outputting the group of initial target frequencies comprises:

performing theoretical fidelity simulation on a quantum layer corresponding to the group of initial target frequencies;

optimizing, based on a result of the theoretical fidelity simulation, a weighting factor that is in the local frequency error model and that is related to the plurality of error influencing factors; and

outputting a group of updated initial target frequencies based on an optimized weighting factor.

14. The system according to claim 13, wherein the model optimization module is further configured to perform the following operation:

determining the group of updated initial target frequencies as the target frequencies that are to be determined.

15. The system according to claim 12 or 13, wherein the frequency determining module further comprises a closed-loop optimization module, and the closed-loop optimization module is configured to perform the following operations:

performing, on an actual platform comprising the multiple qubits, actual fidelity measurement on a quantum layer corresponding to the group of updated initial target frequencies; and

determining the group of updated initial target frequencies as the target frequencies when it is determined that an actual fidelity is within a threshold.

16. The system according to claim 15, wherein the actual fidelity measurement comprises cross entropy benchmarking (XEB) or randomized benchmarking (RB).

17. The system according to claim 15, wherein the closed-loop optimization module is further configured to perform the following operations:

when the actual fidelity is not within the threshold, generating an abnormal topology of the group of initial target frequencies;

generating a to-be-calibrated target frequency set based on the abnormal topology; and

performing frequency fine-tuning of a corresponding single qubit on each target frequency in the target frequency set, to obtain a calibrated target frequency.

18. The system according to any one of claims 10 to 14, 16, and 17, wherein the quantum circuit is a quantum superconducting circuit, and the multi-bit gate is a two-bit gate.

19. A computer-readable medium, wherein the computer-readable medium stores instructions, and when the instructions are executed by a processor, the method according to any one of claims 1 to 9 is implemented.

110

Set, based on a quantum layered structure of a quantum circuit, a corresponding virtual idle layer including a single-bit gate before at least a part of quantum interaction layers in a quantum layer

130

Directly determine, based on a quantum layered structure of a quantum circuit, a group of idle frequencies that are used for multiple qubits and that are for a quantum idle layer

120

Determine, based on a group of idle frequencies that are used for multiple qubits and that are for the virtual idle layer, a group of operating frequencies for the quantum interaction layer

FIG. 1

210

Input any quantum algorithm

120

Layer a quantum circuit obtained according to the quantum algorithm to obtain a quantum layered structure {A}={A1, ..., An}

230

Determine whether each layer is a quantum interaction layer (or includes at least one multi-bit gate)

Yes

250

Set (or insert) one layer of corresponding virtual idle layer including a single-bit gate before the layer, and determine a group of corresponding idle frequencies

No

240

Directly optimize a group of operating frequencies that are for the layer and that are used for qubits

260

Determine, by using the group of idle frequencies corresponding to the virtual idle layer as a limitation condition, a group of operating frequencies that are for the quantum interaction layer and that are used for qubits

270

Output a group of operating frequencies for qubits corresponding to each layer in the quantum circuit or quantum algorithm

FIG. 2

Frequency allocation system 300

Input module 310

Frequency determining module 320

FIG. 3

FIG. 4

EP 4 571 595 A1

500 — 510

Construct a topology of a quantum chip at
which a quantum circuit is targeted

— 520

Construct a local frequency error model
related to a plurality of error influencing
factors

— 530

Output a group of initial target frequencies
based on the local frequency error model

— 560

Optimize a weighting factor
of the local frequency error
model

— 540

Perform theoretical fidelity simulation on a
quantum layer corresponding to the group of
initial target frequencies

— 550

Yes

Determine
whether a result
of the theoretical fidelity simulation
may continue to be
better

No

— 570

Output a group of updated initial target
frequencies

Go to step 610

FIG. 5

600

From
step 570

Invoke an
experimental
interface to
perform actual
fidelity
measurement

610

Whether
an actual fidelity is within a
threshold

620

Yes → Output   630

No

Generate an abnormal topology   631

Whether
parallel calibration may be
performed

641

Yes → Generate calibration
sub-targets   642

No

Generate a calibrated target
frequency set G   632

Parallel processing   643

Frequency fine-tuning of a
single bit   634

Select an element in the set
G   633

Whether G is empty   638

Yes → Output   639

No

Whether
a result of the actual fidelity
measurement is within
a threshold   636

Update the calibrated target
frequency set G   637

FIG. 6

Qubit          Non-tunable coupler

FIG. 7

FIG. 8a

FIG. 8b

## INTERNATIONAL SEARCH REPORT

| International application No. |
| --- |
| **PCT/CN2023/116689** |

**A. CLASSIFICATION OF SUBJECT MATTER**

G06N10/20(2022.01)i; G06N10/40(2022.01)i

According to International Patent Classification (IPC) or to both national classification and IPC

**B. FIELDS SEARCHED**

Minimum documentation searched (classification system followed by classification symbols)

IPC: G06N

Documentation searched other than minimum documentation to the extent that such documents are included in the fields searched

Electronic data base consulted during the international search (name of data base and, where practicable, search terms used)

CNABS; CNTXT; CNKI; WPABS; DWPI; USTXT; WOTXT; EPTXT; IEEE: 量子, 比特, 频率, 层, 门, 单, 双, 多, 相互作用, 虚拟, 闲置, quantum, bit, frequency, layer, gate, single, double, multi, many, interaction, virtual, idle, free

**C. DOCUMENTS CONSIDERED TO BE RELEVANT**

| Category* | Citation of document, with indication, where appropriate, of the relevant passages | Relevant to claim No. |
| --- | --- | --- |
| A | CN 114026576 A (GOOGLE INC.) 08 February 2022 (2022-02-08) description, paragraphs [0050]-[0095] | 1-19 |
| A | CN 114444703 A (UNIVERSITY OF SCIENCE AND TECHNOLOGY OF CHINA) 06 May 2022 (2022-05-06) description, paragraphs [0032]-[0051] | 1-19 |
| A | US 2010194466 A1 (NEC CORP.) 05 August 2010 (2010-08-05) description, paragraphs [0055]-[0081] | 1-19 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **15 October 2023** | **23 October 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2023/116689** |

| Patent document cited in search report | | | Publication date (day/month/year) | Patent family member(s) | | | Publication date (day/month/year) |
| --- | --- | --- | --- | --- | --- | --- | --- |
| CN | 114026576 | A | 08 February 2022 | EP | 3970078 | A1 | 23 March 2022 |
| | | | | AU | 2019454277 | A1 | 20 January 2022 |
| | | | | CA | 3144696 | A1 | 30 December 2020 |
| | | | | US | 2022383180 | A1 | 01 December 2022 |
| | | | | WO | 2020263299 | A1 | 30 December 2020 |
| CN | 114444703 | A | 06 May 2022 | | None | | |
| US | 2010194466 | A1 | 05 August 2010 | CA | 2662604 | A1 | 13 March 2008 |
| | | | | CA | 2662604 | C | 22 January 2013 |
| | | | | WO | 2008029815 | A1 | 13 March 2008 |
| | | | | US | 7847615 | B2 | 07 December 2010 |
| | | | | JP | 5093515 | B2 | 12 December 2012 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211098236